# EUROPÄISCHE PATENTSCHRIFT

(11) **EP 0 800 916 B1**
(45) Veröffentlichungstag und Bekanntmachung des Hinweises auf die Patenterteilung: **02.06.2004**
(21) Anmeldenummer: 97105179.2
(22) Anmeldetag: 27.03.1997
(51) Int. Cl.: B32B 27/40, B63B 7/08, B63C 9/06

(54) **Mehrschichtige thermoplastische Folien aus Polyurethanen und Verfahren zu deren Herstellung**
Multilayer thermoplastic polyurethane foils and method for their production
Feuilles multicouches thermoplastiques en polyuréthane et procédé de leur fabrication

(30) Priorität: 09.04.1996 DE 19614091
(43) Veröffentlichungstag der Anmeldung: 15.10.1997
(73) Patentinhaber: WOLFF WALSRODE AG, 29655 Walsrode (DE)
(72) Erfinder: Schultze, Dirk, Dr., 29683 Fallingbostel (DE); Imbach, Klaus Peter, 29664 Walsrode (DE); Kunold, Reinhard, Dipl.-Ing., 29683 Fallinbostel (DE)
(74) Vertreter: Braun, Rolf, Dr.

(56) Entgegenhaltungen:
- EP-A- 0 391 189
- EP-A- 0 624 463
- EP-A- 0 699 520
- EP-A- 0 754 542
- DE-A- 1 919 804
- DE-A- 4 022 741

## Beschreibung

Diese Erfindung betrifft mindestens zweischichtige elastische thermoplastische Folien, die aus thermoplastischen Polyurethanen bestehen, wobei mindestens eine Schicht aus thermoplastischen Polyurethan Elastomeren, die aus aliphatischen Diisocyanaten synthetisiert wurden und mindestens eine Schicht aus thermoplastischen Polyurethan Elastomeren, die aus aromatischen Diisocyanaten hergestellt wurden, besteht. Zudem betrifft diese Erfindung Verfahren zu ihrer Herstellung sowie ihre Verwendung.

Durch die Kombination von aliphatischen und aromatischen Polyurethan Elastomeren eignet sich dieser Mehrschichtaufbau hervorragend für elastische Aufbauten, die ultraviolettem Licht ausgesetzt sind. Durch das dominierende Rückstellverhalten der aliphatischen Werkstoff-Komponente können entsprechend den erfindungsgemäßen Schichtaufbauten zusammengesetzte Folien für Anwendungen eingesetzt werden, bei denen es auf schnelle Rückstellung ankommt.

### Stand der Technik

Die thermoplastischen Polyurethane (TPU), ihre Herstellung, Verarbeitung und Anwendung sind umfassend in Becker, Braun (Hrsg.): Kunststoff-Handbuch, Band 7, Polyurethane, Hanser Verlag, München, 1983, beschrieben.

Einschichtige Folien aus TPU, Verfahren zu ihrer Herstellung sowie ihre Verwendung sind nach dem Stand der Technik beispielsweise aus der EP 0 308 683 (BF Goodrich), der EP 0 526 858 (Elf Atochem), der EP 0 571 868 (Wolff Walsrode) oder der EP 0 603 680 (Wolff Walsrode) bekannt. Die in diesen Schriften beschriebenen Aufbauten lassen sich als höherschmelzende Schicht bzw. Schichten in Dublofolien integrieren oder sind bereits in die nach ihrer Art bekannten Dublofolien integriert worden, wie z.B. in der EP 0 024 740 (Plate Bonn) beschrieben. Ebenso ist die Herstellung von TPU-Folien unter Einsatz von im wesentlichen unverträglichen Polymeren als Mattierungsmittel in TPU-Elastomeren z.B. in der DE 41 26 499 (Elastogran) beschrieben.

Die aus den zu den thermoplastischen Elastomeren zählenden bekannten aromatischen TPU weisen aber nach Dehnung oftmals ein relativ langsames Rückstellen in den Ausgangszustand auf. Nachteil der bekannten Folien aus aromatischen TPU ist zudem eine geringe Farbechtheit, die insbesondere beim Einfärben mit hellen Farbtönen zu beobachten ist. Exemplarisch sind hier weiße Folien herausgestellt, die unter Lichteinwirkung eine deutliche gelb-Verfärbung erfahren. Dies stört beispielsweise bei der Herstellung von Fußballhüllen aus TPU-Folien, bei denen eine Vergilbung als vermeintliche Alterung interpretiert wird.

Aliphatische TPU gleicher Shore-Härte zeigen nach Dehnung eine schnellere Rückstellung in den Ausgangszustand, bieten eine gute Lichtbeständigkeit und neigen nicht zum Vergilben. Allerdings haben die aliphatischen TPU Nachteile im Bereich der Festigkeiten und im Wärmestand. Insbesondere letztgenannter Umstand wirkt sich bei der formgebenden Weiterverarbeitung von Folien z.B. zu Fußballhüllen ungünstig aus. Aliphatische TPU sind zudem deutlich teurer als die bekannten aromatischen TPU. Aufgrund häufig mangelnder Schmelzefestigkeit ist zudem die Verarbeitung zu Blasfolien auf geringe Schichtdicken - oft unter 200 µm - beschränkt.

Der vorliegenden Erfindung liegt nun die Aufgabenstellung zugrunde, eine Folie mit höherem Wärmestand und ausreichender Schmelzefestigkeit bereitzustellen. Weiterhin gefordert sind Folieneigenschaften, wie eine ausgezeichnete Farbechtheit, die mindestens eine Folienseite charakterisieren muß. Zudem sollten die benötigten Folien preiswerter herzustellen sein, als es für ausschließlich aus aliphatischen TPU bestehende Folien derzeit möglich ist.

Zur Minimierung der bei der Fertigung anfallenden Kosten sollte die Herstellung der Folien in einem Einstufen-Prozess erfolgen.

Erfindungsgemäß gelang es, eine den genannten Anforderungen genügende Folie mit den in Anspruch 1 definierten Merkmalen bereitzustellen, die dadurch charakterisiert ist, daß die Folie aus mindestens zwei Schichten aufgebaut ist, wobei eine der Schichten aus einem aliphatischen TPU (1) und die zweite aus einem aromatischen TPU (2) besteht. Die Schichtenzuordnung entspricht der beigefügten Schemazeichnung der erfindungsgemäßen Mehrschichtfolie.

Die erfindungsgemäßen Mehrschichtaufbauten weisen je Schicht mindestens ein TPU-Harz auf. Diese TPU-Harze sind dadurch gekennzeichnet, daß sie aus linearen, thermoplastisch verarbeitbaren, segmentierten Polyurethan-Molekülen aufgebaut sind. Diese Polyurethane werden hauptsächlich aus alternierenden Blöcken von Weich- und Hartsegmenten gebildet. Die erfindungsgemäß geeigneten TPU-Harze besitzen bevorzugt gewichtsmittlere Molekulargewichte zwischen 50000 und 150000 g/mol. Die Bausteine für die Synthese der Hartsegmente der TPU-Harze können aus den für die Produktion von TPU-Folienrohstoffen bekannten Diisocyanat- und Diol-Komponenten ausgewählt werden.

Die Hartsegmente der TPU-Harze werden aus Kettenverlängeren A) und Diisocyanaten B) gebildet. Die Weichsegmente der TPU-Harze werden aus langkettigen Verbindungen mit mindestens 1,8 Zerewitinoff-aktiven Gruppen C) gebildet.

Als Kettenverlängerer A) kommen kurzkettige bifunktionelle Stoffe zum Einsatz, deren Molekulargewicht zwischen 18 und 350 g/mol beträgt. Geeignet sind kurzkettige Diole. Aber auch der Einsatz von Diaminen oder Diamin/Diol-Mehrkomponentensystemen ist möglich. Bevorzugt einzusetzen sind zweiwertige Alkohole, wie beispielsweise Ethylenglycol, 1,2-Propylenglycol, 1,4-Butylenglycol, 2,3-Butylenglycol, 1,5 Pentandiol, 1,6 Hexandiol oder 1,8-Octandiol.

Geeignete Diisocyanate B) kommen für die aliphatische Schicht (1) aus der Gruppe B1)der aliphatischen oder cycloaliphatischen Diisocyanate.

Zu der Gruppe B1) zählen Diisocyanate wie beispielsweise 1,4-Tetramethylendiisocyanat, 1,6-Hexamethylen-diisocyanat, Cyclohexan-1,3- und -1,4-diisocyanat, Isophoron-diisocyanat und insbesondere hydriertes Diphenylmethan-2,4'- und/oder -4,4'-diisocyanat - allgemein als H₁₂-MDI bezeichnet. Geeignet sind auch Gemische der genannten Diisocyanate.

Für die aromatischen TPU-Harze der Schicht (2) finden aromatische und/oder teilaromatische Diisocyanate B2) Einsatz. Zu der geeigneten Gruppe B2) zählen insbesondere Naphthylen-1,5-diisocyanat, 2,4- und 2,6-Diisocyanatotoluol Diphenylmethan-2,4'- und/oder -4,4'-diisocyanat aber auch Diisocyanat-Gemische.

Für die Ausbildung der langkettigen Weichsegment-bildenden Komponente C) werden vorzugsweise Ether oder -Ester-Polyole eingesetzt. Das Molekulargewichtsmittel dieser Polyole C) liegt bevorzugt zwischen 400 und 10000 g/mol.

Beispielhaft für Hydroxylgruppen-terminierte Polyester sind z.B. Umsetzungsprodukte von mehrwertigen, vorzugsweise zweiwerigen Alkoholen mit mehrwertigen, bevorzugt zweiwertigen Carbonsäuren. Anstelle der freien Polycarbonsäuren können auch die entsprechenden Carbonsäureanhydride oder Carbonsäureester verwendet werden. Die Carbonsäuren sind bevorzugt aliphatischer Natur. Bevorzugt sind Hydroxylgruppen-terminierte Polyester der Adipinsäure und mehrwertigen Alkoholen wie z.B. Ethylenglycol, 1,2- oder 1,3-Propylenglycol, 1,4-Butylenglycol, 2,3-Butylenglycol, 1,5 Pentandiol, 1,6 Hexandiol oder 1,8-Octandiol. Ebenso können aus Lactonen, z.B. -Caprolacton, oder aus Hydroxycarbonsäuren, z.B. -Hydroxycapronsäure, eingesetzt werden.

Beispielhaft für die erfindungsgemäß in Frage kommenden Polyether sind die z.B. durch Polymerisation von Epoxiden wie Ethylenoxid oder Propylenoxid aber auch Tetrahydrofuran erhaltenen Verbindungen genannt. Auch die in der Art bekannten Polyethercarbonat-Verbindungen, die durch Umsetzung von i.a. Oligoether-Verbindungen mit Phosgen erhalten werden, sind für die erfindungsgemäßen Mehrschichtfolien als Weichsegmentkomponente geeignet.

Die Aussenschicht (1) der erfindungsgemäßen Mehrschichtfolie ist aus wenigstens einem aliphatischen TPU-Harz aufgebaut, aus wenigstens einem überwiegend linearen thermoplastischen Polyurethanelastomeren, dessen längerkettige Diolkomponente ein Polyester oder Polyether ist und dessen Shore-Härte im Bereich von 75 - 95 A, vorzugsweise 85 - 95 A, bestimmt nach DIN 53 505, liegt.

Geeignete TPU-Harze sind beispielsweise unter den Handelsnamen Morthane, Tecoflex oder Texin erhältlich.

Die zweite Schicht (2) wird aus aromatischen TPU gebildet. Diese Schicht enthält in einer besonders bevorzugten Ausführung Polymere mit Shore-Härten kleiner als 50 D, jeweils bestimmt nach DIN 53 505.

Die aus aromatischen thermoplastischen Polyurethanelastomeren aufgebaute Schicht (2) wird günstigerweise aus mindestens einem thermoplastischen Polyurethanelastomerharz gebildet, vorzugsweise aus wenigstens einem überwiegend linearen thermoplastischen Polyurethanelastomeren, dessen längerkettige Diolkomponente ein Polyester oder Polyether ist und dessen Shore-Härte in einem Bereich von vorzugsweise 75 - 95 A, besonders bevorzugt 85 - 95 A, bestimmt nach DIN 53 505, liegt.

Geeignete thermoplastische Polyurethane für die Schicht (2) sind beispielsweise unter den Handelsnamen Elastollan, Estane, Desmopan, Pearlthane, Pellethane oder Texin erhältlich.

Für den war es Fachmann überraschend, daß eine solche Folie gegenüber einschichtigen Folien-Aufbauten gleicher Dicke einen verbesserten Weiterreißwiderstand bietet bzw. im Weiterreißversuch höhere Kräfte für den Rißfortschritt nötig sind.

Ebenso war es nicht naheliegend, daß Mehrschichtaufbauten aus aliphatischen und aromatischen TPU eine derart gute Verbundhaftung aufweisen, da für die beiden Schichten TPU-Materialien unterschiedlichen chemischen Aufbaus eingesetzt werden. Wesentliche Unterschiede der verwendeten TPU liegen im chemischen Aufbau der Hartsegmente, wie es oben beschrieben wurde.

Hinzu kommt, daß auf beiden Seiten der erfindungsgemäßen mehrschichtigen Folie ein hoher Erweichungsbereich auf der Koflerbank festgestellt wird, der nicht im Bereich der für die aliphatischen Komponente bestimmten Werte, sondern im Bereich der höher erweichenden aromatischen Komponente liegt. Dies steht in deutlichem Gegensatz zu den nach ihrer Art bekannten Dublofolien aus höher- und niedriger erweichender Schicht, wie sie beispielsweise in der EP 0 024 740 (Plate Bonn) beschrieben sind. Die hier beschriebenen aliphatisch/aromatischen Mehrschichtaufbauten zeichnen sich nicht wie die in der EP 0 024 740 beschriebenen Aufbauten durch hohe Klebrigkeit aus, so daß bei den aliphatisch aromatischen Aufbauten die höher erweichende Schicht die Funktion eines zähen Träger übernehmen kann.

Nicht naheliegend ist es ebenso, daß ein gegenüber Einschichtfolien aus aromatischen TPU verbessertes Rückstellvermögen für die erfindungsgemäßen Folien beobachtet wird.

Eine geeignete Ausführung der erfindungsgemäßen Folien enthält in mindestens einer der aus TPU gebildeten Schichten (1) oder (2) zusätzlich gebräuchliche Additive aus der Gruppe umfassend
I. Antiblockmittel, anorganische oder organische Abstandshalter,
II. Gleit- oder Entformungsmittel,
III. Pigmente oder Füllstoffe und
IV. Stabilisatoren.

Die gebräuchlichen Additive, die in den erfindungsgemäßen Folien enthalten sein können, sind beispielsweise bei Gächter und Müller beschrieben in: Kunststoff-Additive, Carl Hanser Verlag München, 3. Ausgabe (1989). Die Additive werden bevorzugt in vordispergierter Form, d.h. als Masterbatche oder Additiv-Konzentrate, zu den für die Folienherstellung vorgesehenen TPU-Harzen zugegeben. Diese Art der Zugabe ermöglicht ein einfaches Handling und einfaches gleichmäßiges Dosieren der Additiv-Komponenten.

Erfindungsgemäß besonders geeignet sind Folien mit einer Gesamtdicke zwischen 50 µm und 400 µm. Die Dicke der Schicht aus aliphatischen TPU (1) liegt bevorzugt zwischen 20 µm und 250 µm und die Dicke der aromatische TPU Schicht (2) bevorzugt zwischen 20 µm und 250 µm.

Zwischen den Schichten (1) und (2) können in die erfindungsgemäßen mehrschichtigen Folien aufgrund der nicht naheliegenden guten Verbundhaftung weitere Schichten aus aliphatischen oder aromatischen TPU integriert werden.

Zur Herstellung der erfindungsgemäßen Mehrschichtfolie eignen sich besonders die gängigen thermischen Umformverfahren zur Verarbeitung von Kunststoffen zu mehrschichtigen Flächengebilden. Hier wäre die Herstellung durch Coextrusion zu nennen, die bevorzugt nach dem Blasfolienverfahren erfolgt. Aufgrund der besseren erzielbaren Verbundhaftung im Vergleich mit den üblichen Thermokaschierund Beschichtungsverfahren ist die Coextrusion unter den geeigneten Herstellungsverfahren von mehrschichtigen thermoplastischen Flächengebilden im besonderen Maß bevorzugt.

Die zum Aufschluß thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

Die erfindungsgemäßen Folien können mit den bekannten physikalischen und chemischen Behandlungsmethoden wie beispielsweise der Corona-Behandlung einoder beidseitig in ihren Oberflächeneigenschaften modifiziert werden.

Die erfindungsgemäßen Folien eignen sich in eingefärbtem Zustand für dauerhaft flexible und farbechte aber auch abriebfeste Anwendungen in Aussenbereichen. Bevorzugt wird die Verwendung als Aussenhüllen flexibler Behältnisse, insbesondere von Luftkissen. Hier kann die erfindungsgemäße Folie auch ein- oder beidseitig mit Träger- oder Verstärkungstextilien versehen sein.

In besonderem Maß eignen sich die Folien für Anwendungen in Form von Hüllstoffen von Luftkissen-Dämpfungssystemen. Ebenso finden die erfindungsgemäßen Folien als Umhüllung von Luftkissen-Auftriebssystemen, beispielsweise Schlauchbooten oder Rettungsinseln, eine bevorzugte Anwendung.

Eine weitere Anwendung der erfindungsgemäßen Folien ist im Bereich der Außenhüllen für Bälle, insbesondere Sportbälle, besonders bevorzugt Fußbälle anzutreffen.

Für diese Anwendungen, für die sich die erfindungsgemäßen Folien in ausgezeichneter Weise eignen, sind besonders Schichtaufbauten auszuwählen, deren TPU-Harz-Ausgangsmaterialien aus Polymerisaten mit Ether-Weichsegmenten aufgebaut sind, die eine bessere Hydrolyse-Stabilität gegenüber den Ester-basierenden TPU besitzen.

Im folgenden wird die Erfindung anhand von Beispielen weiter verdeutlicht:

### Beispiel A:

Mit Hilfe eines Blasfolienwerkzeuges wurde eine Folie hergestellt, deren eine Aussenschicht (1) aus einem handelsüblichen aliphatischen Ether-TPU der Shore-A-Härte 87, gemessen nach DIN 53 505, entsprechend einer Härte von ca. 33 Shore-D, gebildet wurde. Dieses TPU hatte eine Dichte von 1,08 g/cm³ und einem Schmelzflußindex (MFI) von 18 g/10 min, gemessen nach DIN 53 735 bei 160°C und einer Prüfbelastung von 10 kg. Dieser 90 µm dicken Schicht wurden die üblichen Additive wie 2 Gew.-% Kieselsäure als Abstandshalter und 0,2 Gew.-% Wachse über ein TPU-Additivkonzentrat zugesetzt. Sämtliche für diese Schicht eingesetzten Komponenten wurden gemeinsam in einem Extruder aufgeschlossen.

Die andere Aussenschicht (2) wurde aus aromatischen thermoplastischen Ether-TPU der Shore-A-Härte 85, entsprechend einer Shore-D-Härte von 32, gebildet. Dieses TPU hatte eine Dichte von 1,12 g/cm³ und einem Schmelzflußindex (MFI) von 18 g/10 min, gemessen nach DIN 53 735 bei 190°C und einer Prüfbelastung von 8,7 kg. Das für die Ausbildung dieser 260 µm dicken Schicht aus aromatischem TPU eingesetzte Polymerharz wurde gemeinsam mit 2 Gew.-% Kieselsäure und 0,2 Gew.-% Wachs, die über ein Masterbatch zudosiert wurden, in einem weiteren Extruder plastifiziert.

Die Extrusionseinrichtungen wurden mit Temperaturen zwischen 160°C und 190°C betrieben. Die zwei Schmelzeströme wurden in einem Blasfolienkopf mit einer Verarbeitungstemperatur von 190°C übereinandergelegt und durch eine Ringspaltdüse mit einem Durchmesser von 400 mm ausgetragen. Durch Anblasen mit Luft wurde die ringförmige Schmelzefahne abgekühlt, anschließend flachgelegt, im Randbereich beschnitten und in Form zweier Folienbahnen aufgewickelt.

### Beispiel B:

Eine zweischichtige weiße Folie wurde analog zu Beispiel A hergestellt. Beiden Schichten wurden jedoch je 1,8 % TiO₂ zugesetzt, jeweils realisiert über Masterbatch-Zugabe zur Rohstoff-Mischung, mit einem Gewichtsanteil von ca 60 Gew.-% TiO₂.

### Vergleichsbeispiel 1:

Mit Hilfe des in Beispiel A beschriebenen Blasfolienwerkzeuges wurde eine Folie hergestellt, deren beide Schichten (1) und (2) gleichermaßen zusammengesetzt waren. Ihr Matrixharz bestand aus aromatischem Ether-TPUder Shore-A-Härte 85, entsprechend einer Shore-D-Härte von 32. Es wurde ein TPU-Harz mit einer Dichte von 1,12 g/cm³ und einem Schmelzflußindex (MFI) von 18 g/10 min, gemessen nach DIN 53 735 bei 190°C und einer Prüfbelastung von 8,7 kg, verwendet. Dem Matrixharz der 350 µm dicken Folie wurden vor dem Aufschmelzen 2 Gew.-% Kieselsäure und 0,2 Gew.-% Wachs über ein TPU-Additivkonzentrat zugesetzt. Sämtliche für diese Folie eingesetzten Komponenten wurden gemeinsam in einem Extruder aufgeschmolzen.

Die Extrusionseinrichtungen wurden mit Temperaturen zwischen 160°C und 190°C betrieben. Die zwei Schmelzeströme wurden in einem Blasfolienkopf mit einer Verarbeitungstemperatur von 190°C übereinandergelegt und durch eine Ringspaltdüse mit einem Durchmesser von 400 mm ausgetragen. Durch Anblasen mit Luft wurde die ringförmige Schmelzefahne abgekühlt, anschließend flachgelegt, im Randbereich beschnitten und in Form zweier Folienbahnen aufgewickelt.

### Vergleichsbeispiel 2:

Eine weiße Folie wurde analog zum Vergleichsbeispiel 1 hergestellt. Sie wies einen über Masterbatchzugabe zum Matrixharz realisierten Anteil von 1,8 Gew.-% TiO₂ auf.

### Vergleichsbeispiel 3:

Mit Hilfe des in Beispiel A beschriebenen Blasfolienwerkzeuges wurde eine Folie hergestellt, deren beide Schichten (1) und (2) gleichermaßen zusammengesetzt waren. Ihr Matrixharz bestand aus aliphatischem Ether-TPUder Shore-A-Härte 87, gemessen nach DIN 53 505, entsprechend einer Härte von ca. 33 Shore-D. Es wurde ein TPU-Harz mit einer Dichte von 1,08 g/cm³ und einem Schmelzflußindex (MFI) von 18 g/10 min, gemessen nach DIN 53 735 bei 160°C und einer Prüfbelastung von 10 kg, verwendet. Dem Matrixharz der 350 µm dicken Folie wurden vor dem Aufschmelzen 2 Gew.-% Kieselsäure und 0,2 Gew.-% Wachs über ein TPU-Additivkonzentrat zugesetzt. Sämtliche für diese Folie eingesetzten Komponenten wurden gemeinsam in einem Extruder aufgeschmolzen.

Die Extrusionseinrichtungen wurden mit Temperaturen zwischen 160°C und 185°C betrieben. Die zwei Schmelzeströme wurden in einem Blasfolienkopf mit einer Verarbeitungstemperatur von 180°C übereinandergelegt und durch eine Ringspaltdüse mit einem Durchmesser von 400 mm ausgetragen. Durch Anblasen mit Luft wurde die ringförmige Schmelzefahne abgekühlt, anschließend flachgelegt, im Randbereich beschnitten und in Form zweier Folienbahnen aufgewickelt.

Bewertung der im Rahmen der Beispiele und Vergleichsbeispiele hergestellten Folien:

### Verbundhaftung

Die Verbundhaftung wurde an den im Rahmen der Beispiele und Vergleichsbeispiele hergestellten Mustern direkt nach der Herstellung überprüft. Eine Prüfung nach DIN 53 357 war nicht möglich, da sich die mehrschichtigen Aufbauten nicht nach ihren Schichten trennen ließen.

### Restdehnung

Die Restdehnung wurde an den im Rahmen der Beispiele und Vergleichsbeispiele hergestellten Mustern nach einer Dehnung auf 300 % ermittelt. Hierzu wurde ein 15 mm breiter Folienstreifen mit einer Zugprüfmaschine so gezogen, daß zwei im Abstand von 100 mm angebrachte Markierungen auf einen Abstand von 400 mm gedehnt wurden.

Nach 5 Minuten in gedehntem Zustand wurden die Proben aus der Zugprüfmaschine entnommen und die verbleibende Dehnung nach 1 Minute, 5 Minuten, 1 Stunde und 1 Tag bestimmt.

### Erweichungsbereich

Der Erweichungsbereich gibt einen Anhaltspunkt für das Wärmestandsverhalten der Folien. Nach der Koflerbank-Abziehmethode wird ein ca. 4 mm breiter und ca. 20 cm langer Folienstreifen auf die betriebswarme, zuvor kalibrierte Koflerbank gelegt und nach 2 Minuten abgezogen. Der Abzug erfolgt langsam von der niedrigsten zur höchsten Temperatur unter einem Winkel von 90°. Die Stelle, an der die Folie reißt und der Rest der Folie auf der Koflerbank haften bleibt, ist der Erweichungspunkt. Pro Muster wurden fünf Messungen durchgeführt. Von den fünf Werten einer Reihe werden der niedrigste und höchste Wert als untere und obere Grenze des Erweichungsbereiches angegeben.

### Xenotest Schnellbewitterung

Die Xenotest Schnellbewitterung vermittelt einen Eindruck über Materialveränderungen unter UV-Lichteinwirkung. Hierzu wurden aus den Mustern der Beispiele und Vergleichsbeispiele geschnittene Streifen auf einem Probenträger montiert und in einem Xenotest 150 S Schnellbewitterungsgerät der Fa. Heraeus über 96 h bei 60 % relativer Feuchte mit UV-Licht bestrahlt. Die Bewertung erfolgte nach visuellem Vergleich mit nicht bestrahlten Rücklagemustern der eingesetzten Folien.

In der nachfolgenden Tabelle sind charakteristische Daten der im Rahmen der Beispiele und Vergleichsbeispiele hergestellten Folien wiedergegebenen. Diese zeigen deutlich, daß die in den Beispielen beschriebenen erfindungsgemäßen Folien den im Rahmen der Vergleichsbeispiele dargestellten Folien gegenüber im Vorteil sind.

**Tabelle 1**

| Eigenschaften der im Rahmen der Beispiele und Vergleichsbeispiele hergestellten Folien | | | | | | | |
|---|---|---|---|---|---|---|---|
| **Eigenschaft** | **Bestimmungs- methode** | **Einheit** | **Beispiel A** | **Beispiel B** | **Vergleichs- beispiel 1** | **Vergleichs- beispiel 2** | **Vergleichs- beispiel 3** |
| Verbundhaftung sofort | DIN 53 357 | N/ 15mm | Schichten nicht trennbar | Schichten nicht trennbar | ./. | ./. | ./. |
| Reißkraft. quer | DIN 53455-7-4 | N/ 15mm | 110 | 92 | 118 | 98 | 107 |
| Reißdehnung. quer | DIN 53455-7-4 | % | 583 | 644 | 590 | 636 | 566 |
| Weiterreißkraft, quer | DIN 53515 | N | 23,2 | 22,5 | 21,1 | 20,2 | 12,6 |
| Erw.bereich aliph. Seite | Abziehmethode | °C | 155-160 | 157-161 | ./. | ./ | 119-130 |
| Erw.bereich aromat. Seite | Abziehmethode | °C | 157-162 | 158-165 | 155-161 | 160-167 | ./. |
| Verfärbung der aliphatischen Seite | Xenotest | | nicht erkennbar *) | nicht erkennbar | ./. | ./. | nicht erkennbar |
| Verfärbung der aromatischen Seite | Xenotest | | vergilbt | gelblich | gelblich | gelblich | ./. |
| Restdehnung quer nach 1 Minute | siehe Text | % | 48 | 51 | 56 | 60 | 44 |
| Restdehnung quer nach 5 Minuten | siehe Text | % | 44 | 47 | 52 | 55 | 41 |
| Restdehnung quer nach 1 Stunde | siehe Text | % | 39 | 42 | 47 | 51 | 36 |
| Restdehnnung quer nach 1 Tag | siehe Text | % | 36 | 39 | 41 | 44 | 32 |

| | | | | | | | |
|---|---|---|---|---|---|---|---|
| *) Bei der nicht eingefärbten Folie aus Beispiel A ist ein Durchscheinen der Vergilbung der aromatischen Schicht bemerkbar. | | | | | | | |

Aus Tabelle 1 ist deutlich erkennbar, daß die in den Beispielen dargestellten erfindungsgemäßen zweischichtigen Folienaufbauten unter Verwendung von mindestens einer Schicht aus aliphatischen und einer Schicht aus aromatischen Polyurethanen den in den Vergleichsbeispielen vorgestellten, dem Stand der Technik entsprechenden, Aufbauten aus entweder einer Schicht aus aromatischen oder aber einer Schicht aus aliphatischen TPU hinsichtlich der geforderten Eigenschaften überlegen sind.

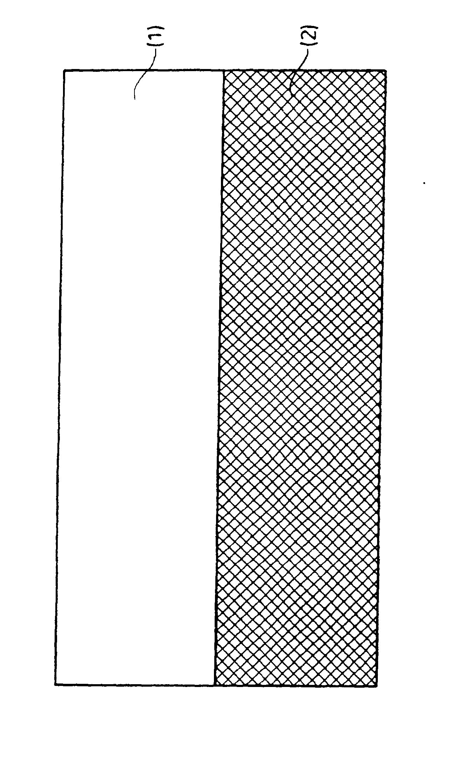

## Patentansprüche

1. Mehrschichtige Folie, mit mindestens einer aussenliegenden Schicht, **dadurch gekennzeichnet, dass** sie im wesentlichen aus aliphatischen thermoplastischen Polyurethanen mit Shore-Härten von 75-95 Shore-A, gemessen nach DIN 53 505 gebildet wird und mindestens eine außenliegende Schicht aufweist, die im wesentlichen aus aromatischen thermoplastischen Polyurethanen gebildet wird und deren Schichten in der Wärme derart miteinander verbunden wurden, dass eine Trennung der mehrschichtigen Aufbaues ohne Zerstörung mindestens einer der Schichten nicht möglich ist.

2. Folie gemäß Anspruch 1, **dadurch gekennzeichnet, dass** die Polyurethan-Harze Shore-Härten von 85-95 Shore-A aufweisen.

3. Mehrschichtige Folie nach den Ansprüchen 1 und/oder 2, **dadurch gekennzeichnet, dass** mindestens eine der Schichten mindestens eine Substanz aus der Gruppe umfassend
I. Antiblockmittel, anorganische oder organische Abstandshalter,
II. Gleit- oder Entformungsmittel,
III. anorganische oder organische Pigmente oder Füllstoffe und
IV. Stabilisatoren
enthält.

4. Verfahren zur Herstellung einer Folie nach mindestens einem der vorangehenden Ansprüche, **dadurch gekennzeichnet, dass** die Folie durch ein Coextrusionsverfahren hergestellt wurde.

5. Verfahren zur Herstellung einer Folie nach mindestens einem der vorangehenden Ansprüche, **dadurch gekennzeichnet, dass** die Folie durch Blasfoliencoextrusion hergestellt wurde.

6. Folie nach mindestens einem der Ansprüche 1 bis 3, **dadurch gekennzeichnet, dass** die Folie eine Gesamtdicke zwischen 50 µm und 400 µm aufweist, wobei die Dicke der Schicht aus aliphatischen TPU (1) zwischen 20 µm und 250 µm und die Dicke der aromatische TPU Schicht (2) zwischen 20 µm und 250 µm liegt.

7. Folie nach mindestens einem der Ansprüche1 bis 3 oder 6, **dadurch gekennzeichnet, dass** als thermoplastische Polyurethan-Harze Polymerisate mit Ether-Weichsegmenten Verwendung finden.

8. Verwendung einer Folie nach mindestens einem der Ansprüche 1 bis 3 oder 6 und 7, als dauerhaft farbechte, flexible und abriebfeste Hüllkomponente von aufblasbaren Kissen oder Blasen.

9. Verwendung einer Folie nach mindestens einem der Ansprüche 1 bis 3 oder 6 und 7 als Hüllkomponente von flexiblen Kammersystemen.

10. Verwendung einer Folie nach mindestens einem der Ansprüche 1 bis 3 oder 6 und 7 als Hüllkomponente von Fussbällen, Schlauchbooten oder Rettungsinseln.

## Claims

1. Multilayer film, having at least one external layer, **characterised in that** it is formed substantially from aliphatic thermoplastic polyurethanes with Shore hardnesses of 75 to 95 Shore A, measured in accordance with DIN 53 505, and **in that** it has at least one external layer formed substantially from aromatic thermoplastic polyurethanes and its layers have been bonded with one another in the heat in such a way that a separation of the multilayer structure without destruction of at least one of the layers is not possible.

2. Film according to claim 1, **characterised in that** the polyurethane resins have Shore hardnesses of 85 to 95 Shore A.

3. Multilayer film according to claims 1 and/or 2, **characterised in that** at least one of the layers contains at least one substance from the group including
I. antiblocking agents, inorganic or organic spacers,
II. lubricants or mould-release agents,
III. inorganic or organic pigments or fillers and
IV. stabilisers.

4. Process for the production of a film according to at least one of the preceding claims, **characterised in that** the film has been produced by a coextrusion process.

5. Process for the production of a film according to at least one of the preceding claims, **characterised in that** the film has been produced by blown film coextrusion.

6. Film according to at least one of claims 1 to 3, **characterised in that** the film has an overall thickness of between 50 µm and 400 µm, the thickness of the layer made of aliphatic TPUs (1) being between 20 µm and 250 µm and the thickness of the aromatic TPU layer (2) being between 20 µm and 250 µm.

7. Film according to at least one of claims 1 to 3 or 6, **characterised in that** polymers containing flexible segments based on ethers are used as thermoplastic polyurethane resins.

8. Use of a film according to at least one of claims 1 to 3 or 6 and 7 as permanently colourfast, flexible and abrasion-resistant covering components of inflatable cushions or bubbles.

9. Use of a film according to at least one of claims 1 to 3 or 6 and 7 as covering components of flexible chamber systems.

10. Use of a film according to at least one of claims 1 to 3 or 6 and 7 as covering components of footballs, rubber dinghies or life-rafts.

## Revendications

1. Feuille multicouche avec au moins une couche externe **caractérisée en ce qu'**elle est formée essentiellement de polyuréthane aliphatique thermoplastique avec des duretés Shore de 75-95 Shore A mesurées selon DIN 53 505 et présente au moins une couche externe qui est formée essentiellement de polyuréthane thermoplastique aromatique et dont les couches ont été liées ensemble par de la chaleur de telle sorte qu'une séparation de la structure multicouche ne soit pas possible sans la destruction d'au moins une des couches.

2. Feuille selon la revendication 1, **caractérisée en ce que** les polyuréthanes-résines présentent des duretés Shore de 85-95 Shore A.

3. Feuille multicouche selon les revendications 1 et/ou 2, **caractérisée en ce qu'**au moins une des couches contienne au moins une substance choisie parmi
I. des agents anti-adhérence de contact, des agents d'écartement inorganiques ou organiques,
II. des lubrifiants ou des agents de démoulage,
III des pigments inorganiques ou organiques ou des charges et
IV. des stabilisateurs.

4. Procédé pour la préparation d'une feuille selon au moins l'une des revendications précédentes, **caractérisé en ce que** la feuille a été préparée par un procédé de co-extrusion.

5. Procédé pour la préparation d'une feuille selon au moins l'une quelconque des revendications précédentes, **caractérisé en ce que** la feuille a été préparée par co-extrusion de feuille de soufflage.

6. Feuille selon au moins l'une quelconque des revendications 1 à 3, **caractérisée en ce que** la feuille présente une épaisseur globale comprise entre 50 µm et 400 µm, l'épaisseur de la couche constituée de TPU aliphatique (1) étant comprise entre 20 µm et 250 µm et l'épaisseur de la couche de TPU aromatique (2) étant comprise entre 20 µm et 250 µm.

7. Feuille selon au moins l'une quelconque des revendications 1 à 3 ou 6, **caractérisée en ce que** l'on utilise comme polyuréthanes-résines thermoplastiques des polymères avec des segments mous d'éther.

8. Utilisation d'une feuille selon au moins l'une quelconque des revendications 1 à 3 ou 6 et 7 comme constituant d'enveloppe solide en couleur, flexible et résistant à l'abrasion sur de longues durées pour des coussins ou des bulles gonflables.

9. Utilisation d'une feuille selon au moins l'une quelconque des revendications 1 à 3 ou 6 et 7 comme constituant d'enveloppe de systèmes de chambres flexibles.

10. Utilisation d'une feuille selon au moins l'une quelconque des revendications 1 à 3 ou 6 et 7 comme constituant d'enveloppe de ballons manipulés au pied, de canots pneumatiques ou d'îles de sauvetage.
